# EUROPEAN PATENT APPLICATION

(11) **EP 1 973 056 A2**
(43) Date of publication of application: **24.09.2008**
(21) Application number: 08102635.3
(22) Date of filing: 14.03.2008
(51) Int. Cl.: G06K 7/00

(54) **RFID Tag Reader**

(30) Priority: 20.03.2007 JP 2007071998; 26.03.2007 JP 2007078874
(71) Applicant: Sanden Corporation, Isesaki-shi, Gunma 372-8502 (JP)
(72) Inventor: Kuwako, Yuji c/o Sanden Corporation, Isesaki-shi Gunma 372-8502 (JP); Tabata, Masaru c/o Sanden Corporation, Isesaki-shi Gunma 372-8502 (JP); Shimamoto, Gaku c/o Sanden Corporation, Isesaki-shi Gunma 372-8502 (JP); Naoto, Matsumoto c/o Sanden Corporation, Isesaki-shi Gunma 372-8502 (JP); Satou, Masaaki, c/o Sanden Corporation, Isesaki-shi Gunma 372-8502 (JP)
(74) Representative: Haley, Stephen

(57) **Abstract**

A control unit of a reader superimposes a control signal for antenna switching on a high frequency signal outputted into an antenna unit from a high frequency circuit. The antenna unit includes: separators for separating the superimposed signals into high frequency signals and control signals; a switch circuit for switching loop antennas; and a control circuit for controlling the switch circuit based on the control signal separated by the separator.

## Description

### Field of the invention

The present invention relates to a radio frequency identification (hereinafter referred to as "RFID") tag reader for contactlessly reading unique numbers assigned to RFID tags affixed on products to be distributed in the distribution field.

### Description of the related art

This kind of RFID tag reader, hereinafter referred to as a "reader", has essential components of antennas for communication with RFID tags and a high-frequency circuit connected with the antennas. These components use various types of implementation modes according to applications of the reader. For example, a reader disclosed in Japanese Patent Publication 2001-118037 will be described below. The reader is aimed at reading RFID tags affixed on products displayed on shelves in a shop. On the top face or the bottom face of a shelf board, there is mounted a slim antenna unit having the roughly same area as that of the shelf board. The high frequency circuit is stored in a housing attached at an appropriate position of the shelf. The high frequency circuit and the antenna unit are connected with each other through a coaxial cable having a predetermined characteristic impedance. The antenna unit has a loop antenna and a matching circuit for impedance matching. Such a reader sequentially reads RFID tags for many products displayed on shelves and transmits read-out data to apparatuses such as a computer.

In reading RFID tags on products displayed on shelves as described above, resonance frequency or antenna impedance may vary with shelf material or material, quantity or orientation of products displayed on shelves, thus causing no impedance matching. As a result, very high precision of reading RFID tags may not be attained. To solve the foregoing problems, there is proposed a method for building a plurality of antennas in an antenna unit. However, if a signal line used for a control signal for switching the antennas is provided separately from the coaxial cable for high frequency signal transmission, this will complicate installation workability.

On the other hand, the apparatus disclosed in the patent document described above has a switch for switching antennas for each shelf, which needs a signal line for controlling the switch. Accordingly, this causes a problem of complicating installation workability.

It is an object of the present invention to provide an RFID tag reader with high reading precision and high installation workability.

To attain the foregoing object, an RFID tag reader according to the present invention includes: a plurality of antennas for communication with an RFID tag; a high frequency circuit for processing a communication signal with the RFID tag; a signal line for connecting the antennas with the high frequency circuit; superimposing means for superimposing a control signal for antenna switching on a high frequency signal outputted from the high frequency circuit to the antennas; separation means for separating the superimposed signal inputted from the superimposing means through the signal line into the high frequency signal and the control signal; and antenna switching means for switching the antennas based on the control signal separated by the separation means.

According to the present invention, the RFID tag reader, having the plurality of antennas, improves precision of reading RFID tags. Additionally, according to the present invention, a control signal for antenna switching is superimposed on the signal line for transmitting the high frequency signal, which needs no signal lines for control signal transmission. Specifically, there is no need of increasing the number of wirings between the high frequency circuit side and the antenna side, thus attaining satisfactory installation workability.

As a method for superimposing the control signal on the high frequency signal, in other words, a method for multiplexing the signal line for transmitting the high frequency signal, various types are applicable.

As an example of a superimposing method, in the RFID tag reader according to the present invention, the superimposing means stops an output of the high frequency signal for a predetermined period and outputs a digitalized control signal within the stopping period, the separation means separates the signals into the high frequency signal and the control signal with a filter circuit, and the antenna switching means has a retention means for retaining the control signal separated by the separation means and switches the antennas based on the control signal retained by the retention means. This method is a kind of time sharing multiplex system and transmits the control signal as a digitalized signal in a time zone while stopping the high frequency signal. The high frequency signal and the control signal are usually in frequency bands different from each other. This permits a filter circuit on the antenna side to separate the high frequency signal and the control signal from each other. Moreover, the antennas are switched based on the separated control signals. This method, transmission of the control signal being intermittent, has the retention means for the control signal on the antenna side and adjusts and controls a constant of a matching circuit based on the retained control signal. In addition, this method may need a power supply for the retention means for the control signal at antenna side. Accordingly, the present invention proposes that the superimposing means applies a DC bias to the superimposed signal and the separator separates a bias current from the superimposed signal and supplies the bias current to the retention means as a power supply.

In addition, as an example of a preferable embodiment of the present invention, the present invention proposes that a plurality of antennas are formed from a plurality of loop antennas arranged in one antenna unit. Furthermore, the present invention proposes that a plurality of antenna units are daisy-chain-connected.

The foregoing object, other objects, features and advantages of the present invention will become apparent from the following description of embodiments with reference to the accompanying drawings in which:
FIG. 1 is a configurational view of an RFID rag reader according to a first embodiment;
FIG. 2 is a functional block view of a control unit according to a first embodiment;
FIG. 3 is a configurational view of an antenna unit according to a first embodiment;
FIG. 4 is a functional block view of an antenna unit according to a first embodiment;
FIG. 5 is a functional block view of a control circuit of an antenna unit according to a first embodiment;
FIG. 6 is a functional block view of a central control device according to a first embodiment;
FIG. 7 is a descriptive view of an output signal of an amplifier;
FIG. 8 is a descriptive view of a DC biased output signal;
FIG. 9 is a descriptive view of a digitalized control signal;
FIG. 10 is a descriptive view of a transmission signal; and
FIG. 11 is a configurational view of an RFID tag reader according to a second embodiment.

### (First Embodiment)

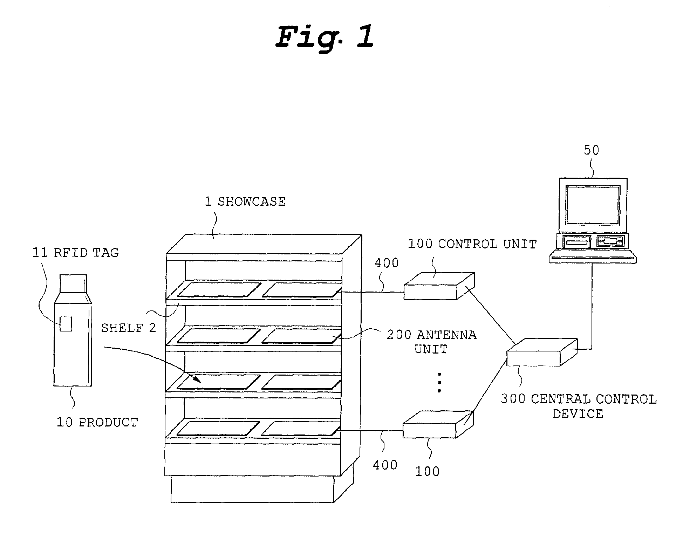

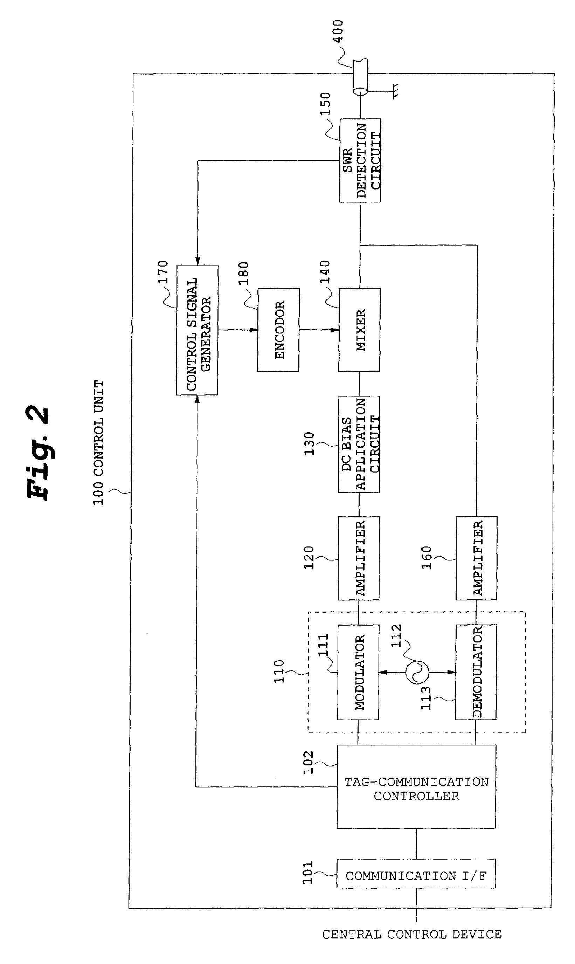

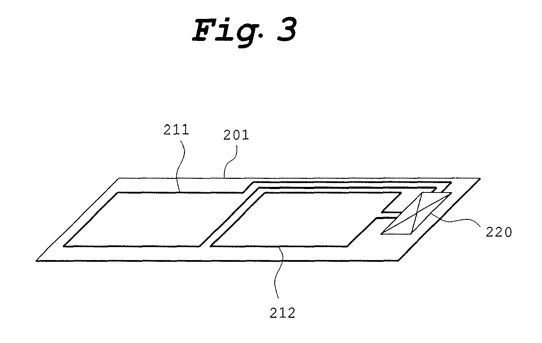

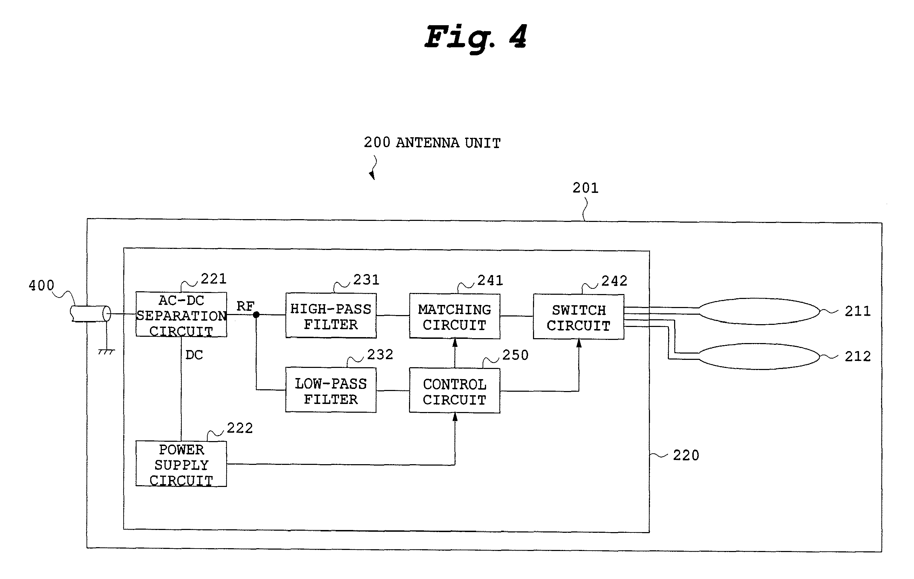

Referring now to accompanying drawings, description will be made on an RFID tag reader according to a first embodiment of the present invention. FIG. 1 is an overall configurational view of an RFID tag reader, FIG. 2 is a functional block view of a control unit, FIG. 3 is a configurational view of an antenna unit and FIG. 4 is a functional block view of an antenna unit.

The reader according to the present embodiment is assumed to be used for applications of reading unique numbers from RFID tags 11 affixed on products 10 displayed on a show case 1 as unique identifier of the RFID tags 11. Generally, product shelves 2 of the show case 1 are made of metal having a severe influence on formation of an electromagnetic field. On the product shelves 2, products 10 of various types of materials are displayed and the number of displays for products 10 constantly change. Accordingly, to read RFID tags 11 on all products 10 displayed on product shelves 2, adjustment work is required in installing or operating the reader. For the reader according to the present embodiment, impedance matching adjustment of antennas is performed.

The show case 1 has a plurality of stages of product shelves 2 for displaying products 10 and a cooling mechanism (not illustrated) for cooling the products 10. Description of the cooling mechanism will be omitted herein because it has the same structure as a conventional one. Antenna units 200 for communicating with RFID tags 11 on displayed products 10 is mounted on the top face of the each product shelf 2. On the top face of the each product shelf 2, the two antenna units 200 are placed side by side on the right and left. The show case 1 is provided with the control unit 100 connected to the each antenna unit 200 one-to-one and the central control device 300 for centralized control of the each control unit 100. The control unit 100 reads a unique number pre-defined on an RFID tag 11 from the tag, using the each antenna unit 200 connected thereto. The central control device 300 counts a total of unique numbers on the RFID tags 11 read by the each control unit 100 and transmits the total data to a computer 50 installed in a shop. The RFID tag reader according to the present embodiment is connected with the control unit 100 and the antenna unit 200 through a coaxial cable 400.

The control unit 100, as illustrated in FIG. 2, includes: a communication interface 101 for connecting with the central control device 300; a tag communication controller 102 for controlling communication with RFID tags 11; a modulator 111 for modulating an output signal of the tag communication controller 102 into a high frequency signal; an oscillation circuit 112 for generating a carrier wave; an amplifier 120 for amplifying a high frequency signal; a DC bias application circuit 130 for applying a DC bias to the high frequency signal from the amplifier 120; a mixer 140; and a standing wave ratio measurement circuit 150 for measuring a voltage standing wave ratio (VSWR). The standing wave ratio measurement circuit 150 is connected to the antenna unit 200 through a connector (not illustrated) and the coaxial cable 400. The control unit 100 has an amplifier 160 for amplifying a high frequency signal received from the antenna unit 200 and a demodulator 113 for demodulating a communication signal from the high frequency signal. Moreover, the control unit 100 has a control signal generator 170 which generates control signals for impedance adjustment and antenna switching control and an encoder 180 for digitalizing the control signal generated by the control signal generator 170. An output signal of the encoder 180 is mixed by the mixer 140. The modulator 111, the demodulator 113 and the oscillation circuit 112 are implemented in a dedicated IC 110 for communication.

The control signal generator 170 generates and transmits a control signal for impedance adjustment or a control signal for antenna switching only when receiving an impedance adjustment instruction signal or an antenna switching instruction signal from the tag communication controller 102. The control signal for impedance adjustment is generated by feedback control so that the standing wave ratio measured by the standing wave ratio measurement circuit 150 is minimum. The control signal for antenna switching is generated based on an antenna switching instruction from the tag communication controller 102.

The antenna unit 200, as illustrated in FIG. 3, has two loop antennas 211, 212 disposed inside a slim housing 201 and a circuit portion 220 connected with the loop antennas 211, 212. The loop antennas 211, 212 are disposed side by side so that the central axis of a magnetic flux of each thereof is in the thickness direction of the housing 201. FIG. 3 is a view with a lid on the top face of the housing 201 removed. In the present embodiment, the two loop antennas 211, 212 are provided for one antenna unit 200, however, three or more loop antennas may be provided, depending upon a size or frequency band of the antenna unit 200.

The antenna unit 200, as illustrated in FIG. 4, includes: an AC-DC separation circuit 221 connected with the coaxial cable 400 through the connector (not illustrated); a power supply circuit 222 for stabilizing a DC signal separated by the AC-DC separation circuit 221; a high-pass filter 231 for passing through a high frequency band of an AC signal separated by the AC-DC separation circuit 221; a low-pass filter 232 for passing through a low frequency band; an impedance matching circuit 241; a switch circuit 242 for switching the loop antennas 211, 212 to be connected; and a control circuit 250 for performing constant control of a matching circuit 241 and switching control of a switch circuit 242.

The AC-DC separation circuit 221 separates signals received from the control unit 100 into DC components and AC components. The voltage of the separated DC component becomes a bias value applied by the DC bias application circuit 130 of the control unit 100. The separated AC component is a high frequency signal outputted from the amplifier 120 on the transmission side or a digital signal outputted from the encoder 180. The DC signal separated by the AC-DC separation circuit 221 is stabilized by the power supply circuit 222 and supplied as a power supply of the control circuit 250.

The high-pass filter 231 allows passing of a high frequency signal outputted from at least the amplifier 120. On the other hand, the low-pass filter 232 permits passing of an output signal from at least the encoder 180. Specifically, the high-pass filter 231 and the low-pass filter 232 function as a separation circuit for separating a high frequency signal for communication with RFID tags 11 from a control signal thereof.

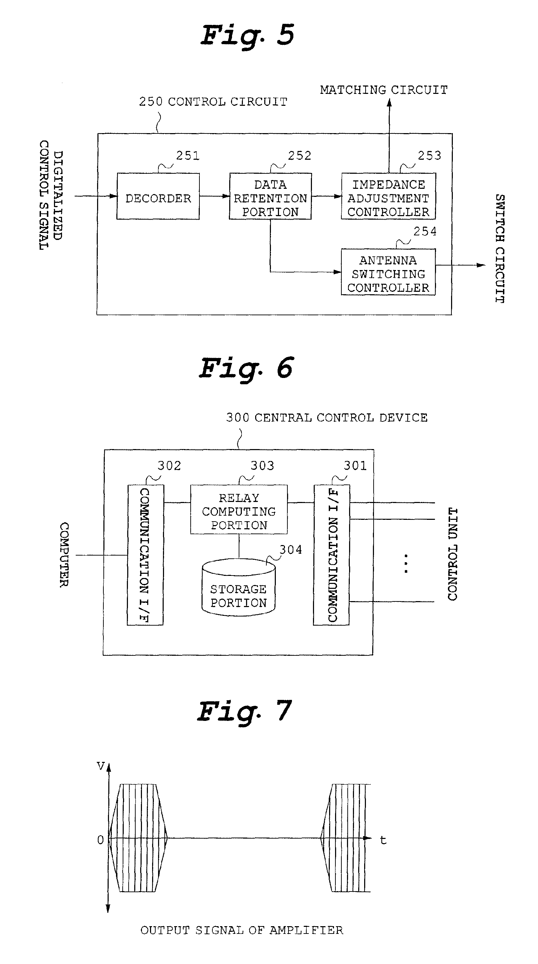

The control circuit 250, as illustrated in FIG. 5, includes: a decoder 251 for decoding a signal passing through the low-pass filter 232 and capturing a control signal; a data retention portion 252 for retaining a value of the control signal from the decoder 251; an impedance adjustment controller 253 for controlling a constant of the matching circuit 241 based on a control value of retained by the data retention portion 252; and an antenna switching controller 254 for controlling the switch circuit 242 so as to switch the loop antennas 211, 212 based on the control value retained by the data retention portion 252.

The central control device 300, as illustrated in FIG. 6, includes: a communication interface 301 for connecting with the control unit 100; a communication interface 302 for connecting with the computer 50; a relay computing portion 303 for counting a total of unique numbers of RFID tags 11 received from the each control unit 100 and transmitting the counted data to the computer 50; and a storage portion 304 used for totalizing unique numbers with the relay computing portion 303. The relay computing portion 303 sequentially requests data transmission from the control unit 100 to be connected, receives unique numbers of RFID tags 11 from the each control unit 100 and temporarily stores the unique numbers in the storage portion 304. The relay computing portion 303 transmits data stored in the storage portion 304 to the computer 50. Moreover, only when there is some change in the stored data, the relay computing portion 303 transmits the data to the computer 50. Specifically, the relay computing portion 303 transmits only difference data to the computer 50.

Next, description will be made on reading operation for RFID tags 11 with the reader. First, signal processing in the basic operation of the reader will be described below. The tag communication controller 102 outputs a telegraphic message in accordance with a protocol for communication with RFID tags 11. An output signal of the tag communication controller 102 modulates a carrier wave supplied from the oscillation circuit 112 with the modulator 111. A high frequency signal outputted from the modulator 111 is amplified by the amplifier 120 and is DC-biased by the DC bias application circuit 130 as needed. A high frequency signal outputted from the DC bias application circuit 130 is transmitted to the antenna unit 200 through the coaxial cable 400.

High frequency signals transmitted to the antenna unit 200 are separated into DC signals and AC signals by the AC-DC separation circuit 221. The DC signal corresponds to a DC bias applied by the DC bias application circuit 130. On the other hand, the AC signal corresponds to a high frequency signal outputted from the modulator 111. The high frequency signal is radiated from either of the loop antennas 211, 212 through the matching circuit 241 and the switch circuit 242. Each of RFID tags 11 operates using a received high frequency signal as a power supply and transmits a response signal. A response signal received by the loop antennas 212, 212 is inputted into the amplifier 160 on the reception side through the switch circuit 242, the matching circuit 241, the AC-DC separation circuit 221 and the coaxial cable 400. A high frequency signal amplified by the amplifier 160 is demodulated by the demodulator 113. The demodulated signal is inputted into the tag communication controller 102.

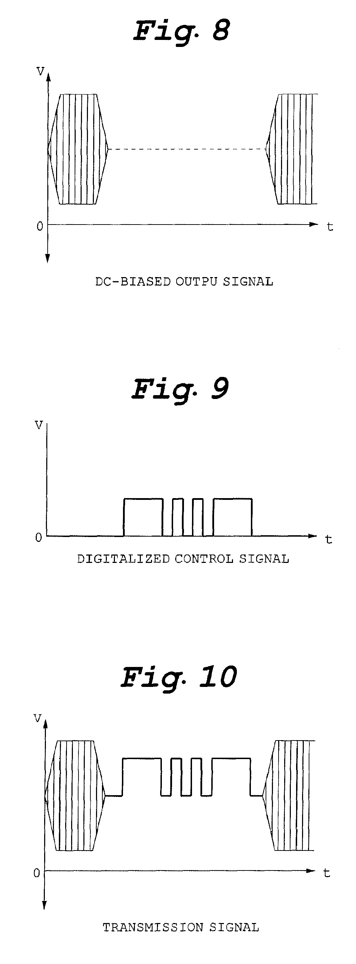

Next, description will be made on operation of impedance matching adjustment with the reader according to the present embodiment. The tag communication controller 102 stops an output of a transmission signal at predetermined time intervals and transmits an impedance adjustment instruction signal to the control signal generator 170 within a stopping period of the transmission signal. The DC bias application circuit 130 applies a predetermined bias voltage to an amplified high frequency signal. On the other hand, the control signal generator 170 generates a control signal by feedback control so that a standing wave ratio measured by the standing wave ratio measurement circuit 150 is minimum and outputs a control signal only when an impedance adjustment instruction signal is received from the tag communication controller 102. The control signal is digitalized by the encoder 180 and is mixed with an output signal of the DC bias application circuit 130 by the mixer 140. FIG. 7 illustrates a high frequency signal outputted from the amplifier 120. FIG. 8 illustrates a high frequency signal outputted from the DC bias application circuit 130. FIG. 9 illustrates an output signal from an encoder 180. FIG. 10 illustrates a superimposed signal outputted from the mixer 140.

Superimposed signals to be transmitted through the coaxial cable 400 are separated into DC signals and high frequency signals by the AC-DC separation circuit 221 of the antenna unit 200. The separated DC signals, voltages of which are stabilized by the power supply circuit 222, are supplied to the control circuit 250 as a power supply. Of the separated high frequency signals, output signals from the amplifier 120 are supplied to the loop antennas 211, 212 through the high-pass filter 231, the matching circuit 241 and the switch circuit 242. Of the separated high frequency signals, digital signal components are inputted into the control circuit 250 through the low-pass filter 232. The digital signal which has passed through the low-pass filter 232 is decoded by the decoder 251 of the control circuit 250 to capture a control signal. The decoded control signals are retained by the data retention portion 252. The impedance adjustment controller 253 controls a constant of the matching circuit 241 based on the control signals retained by the data retention portion 252. As an example of a specific circuit configuration for impedance matching adjustment, the matching circuit 241 has one or more series circuits of a prescribed impedance element and a switch device such as transistor or relay switch. The impedance adjustment controller 253 switches a constant of the matching circuit 241 by switching on/off of the switch device.

Next, description will be made on operation of antenna switching with the reader according to the present embodiment. The tag communication controller 102 stops an output of a transmission signal and transmits an antenna switching instruction signal to the control signal generator 170 within a stopping period of the transmission signal. The DC bias application circuit 130 applies a prescribed bias voltage to an amplified high frequency signal. On the other hand, the control signal generator 170 outputs a control signal for antenna switching while receiving an antenna switching instruction signal from the tag communication controller 102. The control signal is digitalized by the encoder 180 and mixed with an output signal of the DC bias application circuit 130 by the mixer 140.

The control signal for antenna switching is retained in the data retention portion 252 according to a similar procedure to that for the control signal for impedance adjustment. The antenna switching controller 254 selectively controls the loop antennas 211, 212 to be connected by on-off controlling the switch device of the switch circuit 242 in accordance with the control signal retained by the data retention portion 252.

Such a reader can transmit high frequency signals for communication with RFID tags 11 and control signals for impedance matching adjustment and for antenna switching with only one coaxial cable 400, thus attaining high installation workability and reading precision.

### (Second Embodiment)

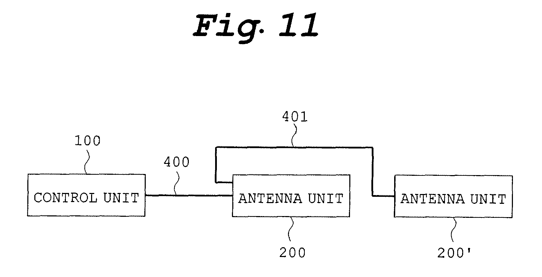

Referring next to the accompanying drawings, description will be made on an RFID tag reader according to a second embodiment of the present invention. A difference of the present embodiment from the first embodiment is that a plurality of antenna units 200 are connected with one control unit 100. Specifically, as illustrated in FIG. 11, a control unit 100 is connected with the first antenna unit 200 through a coaxial cable 400, and the first antenna unit 200 is connected with a second antenna unit 200' through a coaxial cable 401. More specifically, the plurality of antenna units 200 are daisy-chain-connected with the one control unit 100.

In the RFID tag reader, a tag communication controller 102 of the control unit 100 makes a control signal for antenna switching include numbers for identifying each of the antenna units 200, 200'. An antenna switching controller 254 of the respective antenna units 200, 200' has a storage portion for storing own identification numbers or a setter, such as a switch, for setting own identification numbers. In addition, the antenna switching controller 254, when a control signal for antenna switching has an own identification number, performs the same antenna switching control as in the first embodiment. On the other hand, when the control signal for antenna switching has no own identification number, the antenna switching controller 254 controls a switch circuit 242 so that all loop antennas 211, 212 are disconnected.

The RFID tag reader according to the present embodiment permits a plurality of antenna units to share the one control unit 100. The respective antenna units 200 are daisy-chain-connected, which provides excellent installation workability.

The embodiments of the present invention have been described above, however, the present invention is not limited hereto. For example, in the respective embodiments, a show case has been described as an installation place of the reader, but the present invention may be used for other various applications.

The above-described embodiments have introduced a method for superimposing digitalized signals within a stopping period of a high frequency circuit as a method for superimposing control signals, however, may use other various superimposing methods. For example, various types of methods, such as amplitude modulation and frequency modulation, may be proposed.

## Claims

1. An RFID tag reader comprising:
a plurality of antennas (211, 212) for communication with an RFID tag (11);
a high frequency circuit (110, 120, 160) for processing a communication signal with the RFID tag (11);
a signal line (400) for connecting the antennas (211, 212) with the high frequency circuit (110, 120, 160);
superimposing means (130, 140, 170, 180) for superimposing a control signal for antenna switching on a high frequency signal outputted from the high frequency circuit (110, 120, 160) to the antennas (211, 212);
separation means (221, 231, 232) for separating the superimposed signal inputted from superimposing means (130, 140, 170, 180) through the signal line (400) into the high frequency signal and the control signal; and
antenna switching means (242, 250) for switching the antennas (211, 212) based on the control signal separated by the separation means (221, 231, 232).

2. The RFID tag reader according to claim 1, wherein
the superimposing means (130, 140, 170, 180) stops an output of the high frequency signal for a predetermined period and outputs a digitalized control signal within the stopping period,
the separation means (221, 231, 232) separates the signals into the high frequency signal and the control signal with a filter circuit (231, 232), and
the antenna switching means (242, 250) has retention means (252) for retaining the control signal separated by the separation means (221, 231, 232) and switches the antennas (211, 212) based on the control signal retained by the retention means (252).

3. The RFID tag reader according to claim 2, wherein
the superimposing means (130, 140, 170, 180) applies a DC bias to the superimposed signal, and
the separation means (221, 231, 232) separates a bias current from the superimposed signal and supplies the bias current to the retention means (252) as a power supply.

4. The RFID tag reader according to claim 1, 2 or 3, wherein
the superimposing means superimposes (130, 140, 170, 180) the control signal for antenna switching and a control signal for impedance adjustment on the high frequency signal, and
the RFID tag reader further comprises: a matching circuit (241) for impedance-matching the high frequency signal separated by the separation means (221, 231, 232) and inputting the signal into the antennas (211, 212); and adjustment means (253) for controlling a circuit constant of the matching circuit (241) based on the control signal for impedance adjustment separated by the separation means (221, 231, 232).

5. The RFID tag reader according to claim 4, wherein
the matching circuit (241) and the adjustment means (253) are common to the plurality of antennas (211, 212).

6. The RFID tag reader according to claim 1, 2, 3, 4 or 5, wherein
the plurality of antennas (211, 212) are a plurality of loop antennas (211, 212) disposed in one antenna unit (200).

7. The RFID tag reader according to claim 6, wherein
the plurality of antenna units (200, 200') are daisy-chain-connected.
